# EUROPÄISCHE PATENTSCHRIFT

(11) **EP 3 461 628 B1**
(45) Veröffentlichungstag und Bekanntmachung des Hinweises auf die Patenterteilung: **17.07.2024**
(21) Anmeldenummer: 18197241.5
(22) Anmeldetag: 27.09.2018
(51) Int. Cl.: B29C 73/30, B29C 73/10

(54) **VAKUUMFOLIE MIT BELÜFTUNGSEIGENSCHAFTEN**
VACUUM FILM WITH VENTILATION CHARACTERISTICS
FILM DE MISE SOUS VIDE À PROPRIÉTÉS D'AÉRATION

(30) Priorität: 28.09.2017 DE 102017122630
(43) Veröffentlichungstag der Anmeldung: 03.04.2019
(73) Patentinhaber: Airbus Operations GmbH, 21129 Hamburg (DE)
(72) Erfinder: Kleinpeter, Roman, 21129 Hamburg (DE); Karrasch, Tobias, 21129 Hamburg (DE)

(56) Entgegenhaltungen:
- EP-A1- 2 796 265
- DE-A1- 102013 212 420
- DE-U1- 202010 012 086
- US-A- 5 215 824
- US-A- 5 837 185
- US-A1- 2010 108 255

## Beschreibung

### Gebiet der Erfindung

Die Erfindung betrifft ein Hilfsmittel für die Reparatur von Bauteilen aus Faserverbundwerkstoffen wie GFK (glasfaserverstärkter Kunststoff) oder CFK (kohlefaserverstärkter Kunststoff), insbesondere im Flugzeugbau und bei der Reparatur von Flugzeugen.

### Hintergrund der Erfindung

Faserverbundwerkstoffe können ein Verstärkungsmaterial (Fasern) und eine Matrix umfassen. Die Matrix umhüllt und fixiert die Fasern. Die Fasern können aus Aramid, Kohlenstoff, Glas, Holz bestehen. Im Flugzeugbau spielen vor allem Glasfasern und Kohlenstofffasern eine Rolle. Als Matrix spielen Reaktivharze, so genannte Thermosets, eine große Rolle. Diese können Polyester- oder Epoxidharze sein. Die Matrix kann auch aus thermoplastischen Kunststoffen bestehen wie beispielsweise Polyetheretherketon (PEEK). Thermoplastische Kunststoffe sind nicht reaktiv, können aber durch Aufschmelzen verflüssigt werden und so Fasern umhüllen. Meist weisen Faserverbundwerkstoffe einen schichtartigen Aufbau auf, bei dem die Fasern in einer Mehrzahl von Schichten in verschiedenen Richtungen verlaufen.

Flugzeuge werden heutzutage teilweise oder weitgehend aus Faserverbundwerkstoffbauteilen gefertigt. Leitwerke von Airbus Flugzeugen bestehen bereits seit langer Zeit aus kohlefaserverstärktem Kunststoff. Viele moderne Segelflugzeuge bestehen größtenteils aus glasfaserverstärktem Kunststoff. Aktuelle Flugzeugmodelle weisen weiterhin Rumpf und/oder Flügel aus kohlefaserverstärktem Kunststoff auf oder diese bestehen weitgehend aus diesem Material.

Beim Betrieb von Flugzeugen kommt es unweigerlich zu Beschädigungen durch herumfliegende Steine, Eis, Vögel oder Projektile. Besteht die Oberfläche eines Flugzeugs an der geschädigten Stelle aus Metall so ist die Reparatur relativ einfach möglich: Die schadhafte Stelle wird herausgetrennt und ein material- und größengleiches Ersatzstück eingesetzt. Dies wird durch Vernieten mit dem angrenzenden Material verbunden.

Ein solches Vorgehen ist meist bei faserverstärkten Kunststoffwerkstoffen nicht möglich, weil das Material aus vielen Faserlagen besteht und seine Stabilität aus der Verbindung dieser einzelnen Lagen untereinander hervorgerufen wird. Daher ist es nötig, die schadhafte Stelle so zu bearbeiten, dass die Reparaturlagen an die vorhandenen intakten Lagen direkt angrenzen und jeweils durch weitere Lagen partiell bedeckt werden. Dazu wird nicht ausgehärtetes Prepreg- oder Thermoplast-Material verwendet. Unter nichtausgehärtetem Material versteht man Material, dessen Matrixmaterial die Fasern umhüllt, zunächst flüssig oder halbflüssig ist oder in einen solchen Zustand überführt werden kann und welches später durch Härten oder Abkühlen konsolidiert.

Bei der Reparatur von Faserverbundmaterialien werden also neue, nicht ausgehärtete oder aushärtbare Faserlagen eingebracht. Um einen möglichst hohen Faseranteil nach dem Aushärten zu erreichen, erfolgt das Aushärten unter Druck.

Üblich sind beheizte Pressen um den erforderlichen Druck zu erzeugen. Diese eignen sich in den seltensten Fällen zu Reparatur von Flugzeugen. Eine andere verbreitete Möglichkeit sind sogenannte Vakuumaufbauten. Dabei werden die auszuhärtenden Materialien in eine Folie eingeschlossen, mit Vakuum beaufschlagt und ausgehärtet. Durch den Atmosphärendruck werden dabei die auszuhärten Faserlagen zusammengedrückt, durch Zuführen von Wärme aufgeheizt und konsolidiert. Zur Aufnahme von überschüssige Matrixmaterial ist wird oft ein Abreißgewebe verwendet, welches überschüssiges Harz aufnimmt und das nach dem Aushärten leicht entfernt werden kann. Damit innerhalb des Vakuumaufbaus überall weitgehend gleicher Druck herrscht, kommen so genannte Belüftungsgewebe zum Einsatz. Diese erlauben es, dass sich Luft oder Gas innerhalb des Vakuumaufbaus weitgehend frei bewegen kann.

Das Aushärten des Materials wird durch Temperaturerhöhung und Wärmezufuhr erreicht. Dazu werden Heizdecken, Warmluftzelte oder Warmluftboxen verwendet. Das Positionieren und Konfektionieren der verwendeten Hilfsstoffe Vakuumfolie, Abreißgewebe und Belüftungsgewebe ist schwierig und zeitintensiv. Bei den neuerdings verwendeten thermoplastisch imprägnierten Faserverbundwerkstoffen muss zum Teil mit hohen Temperaturen von bis zu 400°C gearbeitet werden.

EP 2796265 A1 offenbart eine Folie gemäß dem Oberbegriff des Anspruchs 1 in einem Gerät zum thermischen Behandeln einer zu reparierenden Oberfläche aus Compositematerial mit einer Abdeckung mit einem Generatorelement für ein elektromagnetisches Feld, Temperatursensoren, eine elektrische Energiequelle, ein Heizelement, ein Stempel aus polymerisierbarem Material, wobei geregelte Induktionsspulen zum Heiten verwendet werden.

Eine Aufgabe der vorliegenden Erfindung war das Bereitstellen von Hilfsstoffen, die zur Reparatur von mit thermoplastischen Matrixmaterial imprägnierte Faserverbundwerkstoffen geeignet sind und die Reparaturen einfacher und schneller machen.

### Beschreibung der Erfindung

Es hat sich nun für den Fachmann völlig überraschend herausgestellt, dass eine Folie für die Reparatur von Flugzeugbauteilen aus faserverstärktem thermoplastischem Kunststoff gemäß dem Anspruch 1 den Nachteilen des Standes der Technik abhilft. Mit einer solchen Folie kann sehr einfach und schnell ein Vakuumaufbau bereitgestellt werden, der auch hohen Temperaturen standhält. Bevorzugt ist es, wenn das elektrisch leitende Material einen spezifischen Widerstand und eine Schichtdicke aufweisen, die es erlauben durch elektrischen Strom die Folie aufzuheizen. Dadurch kann auf Warmluftzelte, Autoklaven usw. verzichtet werden, was extrem vorteilhaft ist, da solche Apparate nicht ohne weiteres im erforderlichen Temperaturbereich von bis zu 400°C betrieben werden können. Solche erfindungsgemäßen Folien eignen sich auch für mit Epoxydharz imprägnierten Prepregs. Vorteilhaft ist dieses im einem Bindemittel gebunden. Bevorzugt ist es, wenn die Folie eine Stärke von 50 bis1 00 Mikrometer aufweist. Bevorzugt ist es, wenn die Prägung der Folie eine Tiefe der Prägung 0,01 bis 0,5 mm misst. Die Prägung ermöglicht das flächige Evakuieren von Gasen aus dem (Reparatur)vakuumaufbau zum Ausbau eines Druckunterschiedes. Die Prägung ersetzt den Einsatz eines Belüftungsgewebes. Als Prägungsgeometrien sind beispielsweise Kegel, Kegelstümpfe, Pyramiden, Pyramidenstümpfe sowie halbkugelartige Einprägungen möglich. Bevorzugt ist es, wenn die Folie eine weitere Schicht aus einem Material mit Ablöseeigenschaften aufweist. Dazu kann die geprägte Folie mittels Plasma oberflächlich derart modifiziert werden, so dass keine Verbindung zum Substrat erfolgt. Die Beschichtung hinterlässt keine Rückstände auf dem Substrat. Die Beschichtung ermöglicht ein Entfernen der Vakuumfolie, ohne dass diese das Substrat nachteilig beeinflussen kann. Die aufgebrachte Trennschicht ersetzt eine herkömmliche Trennfolie. Bevorzugt ist es, wenn die Folie herstellbar ist durch ein Verfahren, umfassend die folgenden Schritte: Bereitstellen der Folie aus Polyimid, Bedrucken der Folie mit einer Beschichtung, die elektrisch leitendes Material enthält, Prägen der beschichteten Folie mit einer Prägewalze. Es ist möglich die Folie zuerst zu prägen und nachfolgend zu bedrucken oder die Folie zuerst zu bedrucken und nachfolgend zu prägen. Durch all das werden Trennfolie, Vakuumfolie und Heizelement in einem Material vereint. Durch das Aufdrucken ist 12928 neue Unterlagen EP-ESOp.doc30.09.2019 eine sehr genaue Wärmeeinbringung in das Reparaturfeld möglich, ebenso kann man mit variabler Schichtstärke des ausgedruckten Materials die Wärmeeinbringung gezielt den Gegebenheiten anpassen. Das aufgedruckte Material ersetzt eine herkömmliche Heizmatte, die in diesem Fall die Einsatztemperatur von bis zu 400°C bei Thermoplastreparaturen nicht erreichen würde.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Kurze Beschreibung der Zeichnungen

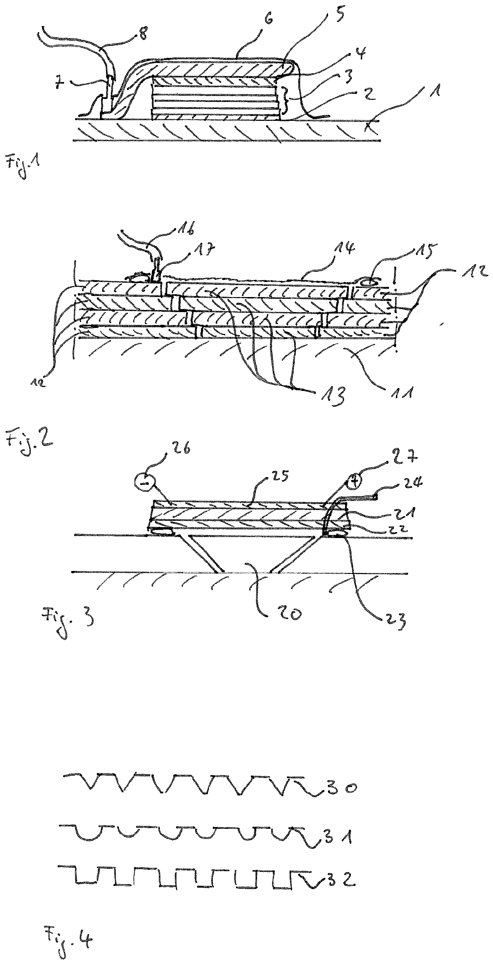

Figur 1 zeigt einen herkömmlichen Vakuumaufbau, Figur 2 zeigt einen neuen Vakuumaufbau mit einer erfindungsgemäßen Vakuumfolie, Figur 3 zeigt eine weitere Ausführungsform der erfindungsgemäßen Vakuumfolie, Figur 4 zeigt mögliche Prägungen einer erfindungsgemäßen Vakuumfolie.

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrative und nicht beschränkend sind.

### Detaillierte Beschreibung von Ausführungsformen

Figur 1 zeigt einen herkömmlichen Vakuumaufbau

Auf ein Formwerkzeug oder eine intakte und nicht beschädigt Bauteilfläche (1) wird eine Trennfolie (2) gelegt oder ein Trennmittel (2) aufgebracht. Darauf können geeignete Prepreglagen (1) aufgelegt werden. Anschließend kann Abreißgewebe mit einer oberseitig liegenden Trennfolie (4) aufgelegt werden, auf welches ein Belüftungsgewebe (5) aufgelegt wird. Abschließend wird eine Vakuumfolie (6) aufgebracht, in die ein Fitting (7) eingebracht ist, welcher mit einem Schlauch (8) verbunden ist. Durch Anlegen von Vakuum durch den Schlauch (8) kann Luft aus dem Aufbau gesaugt werden. Das Belüftungsgewebe (6) erlaubt eine weitgehend gleichartige Druckverteilung innerhalb des Vakuumaufbaus. Zum Aushärten des Prepregmaterials (3) wird Wärme zugeführt. Dies kann durch einen Autoklaven, eine Heizmatte, eine Warmluftbox oder ein Warmluftzelt erfolgen. Beim Aushärten des Prepregmaterials (3) tritt überschüssiges Matrixmaterial in das Abreißgewebe (4) über. Nach dem Belüften kann die Folie (6), das Belüftungsmaterial (5) und das Abreißgewebe mit der oberseitig liegenden Trennfolie (7) nebst darin enthaltenem ausgehärtetem Matrixmaterial entfernt und entsorgt werden.

Figur 2 zeigt einen neuen Vakuumaufbau mit einer erfindungsgemäßen Vakuumfolie.

Auf intakte CFK-Lagen (11) werden nicht ausgehärtete Prepreglagen (13) so aufgelegt, dass sie auf Stoß zu intaktem Material (12) zu liegen kommen. Die erfindungsgemäße Folie (14) wird aufgelegt und mit einem Dichtmittel (15) rundum zum intakten Bauteil (11), (12) hin abgedichtet. Über den Schlauch (16) und den Fitting (17) wird Vakuum angelegt. Das Aushärten erfolgt unter Verwendung eines Autoklaven, einer Heizmatte, einer Warmluftbox oder eines Warmluftzeltes. Nach dem Aushärten des Bauteils bzw. der Reparaturstelle (13) kann die erfindungsgemäße Folie (14) entfernt werden. Außer der Folie (14) und dem Dichtmittel (15) fallen keine weiteren Abfälle an.

Figur 3 zeigt eine weitere Ausführungsform der erfindungsgemäßen Vakuumfolie.

Die auszuhärtende Reparaturstelle (20) umfasst nicht ausgehärtetes Prepregmaterial oder thermoplastisch verstärktes Material aus Kohlenstofffasern und wird mit der Vakuumfolie (21) bedeckt, die eine Beschichtung (22) mit Ablöseeigenschaften aufweist. Dies kann eine Plasmabeschichtung sein. Ein Dichtmittel (23) dichtet die Folie (21) zum intakten Bauteil hin ab. Das Dichtmittel (23) kann ein Kittband sein. Ein Fitting sowie ein Schlauch (24) erlauben das Anlegen von Vakuum. Eine außenliegende elektrische leitende Beschichtung (25) erlaubt über elektrische Anschlüsse (26) und (27) das Anlegen von Strom und damit die Erzeugung und Übertragung von Wärme auf die Reparaturstelle (20) (Widerstandsheizung). Die Beschichtung (25) kann aus Metall oder Carbon-Nanotubes bestehen.

Figur 4 zeigt mögliche Prägungen einer erfindungsgemäßen Vakuumfolie Die Prägungen (30) der Folie können kegel- oder pyramidenförmig sein. Andere erfindungsgemäße Prägungen der Folie (31) können dellenförming sein oder die Form von Kugel Abschnitten haben, ähnlich wie bei einem Golfball.

Weitere ebenfalls erfindungsgemäße Prägungen (32) können die Form von Würfeln oder Quadern aufweisen.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

### Bezugszeichenliste

- 1: Intakte Bauteilfläche
- 2: Trennfolie
- 3: Prepreglagen
- 4: Abreißgewebe und Trennfolie
- 5: Belüftungsgewebe
- 6: Vakuumfolie
- 7: Fitting
- 8: Vakuumschlauch
- 11: unterliegende intakte CFK-Lagen
- 12: In gleicher Ebene angrenzende intakte CFK-Lagen
- 13: nicht ausgehärtete Prepreglagen bzw. Reparaturstelle
- 14: Folie
- 15: Dichtmittel
- 16: Vakuumschlauch
- 17: Fitting
- 20: auszuhärtende Reparaturstelle
- 21: Vakuumfolie
- 22: Beschichtung mit Ablöseeigenschaften
- 23: Dichtmittel
- 24: Fitting mit Schlauch
- 25: elektrische leitende Beschichtung
- 26, 27: elektrische Anschlüsse
- 30: Folie mit kegel- oder pyramidenförmigen Prägungen
- 31: Folie mit dellenförmingen Prägungen
- 32: Folie mit Prägungen in Form von Würfeln oder Quadern

## Patentansprüche

1. Folie für die Reparatur von Flugzeugbauteilen aus faserverstärktem thermoplastischem Kunststoff aufweisend eine Folie aus Polyimid 21 und eine Beschichtung aus einem elektrisch leitenden Material 25, **dadurch gekennzeichnet, dass** die Folie geprägt ist und die geprägte Folie 21 im Wesentlichen aus Kapton besteht, wobei das elektrisch leitenden Material 25 Metall- oder Graphitpulver ist.

2. Folie nach Anspruch 1 **dadurch gekennzeichnet, dass** das elektrisch leitende Material 25 einen spezifischen Widerstand und eine Schichtdicke aufweisen, die es erlauben durch elektrischen Strom die Folie 21 aufzuheizen.

3. Folie nach einem der vorangehenden Patentansprüche **dadurch gekennzeichnet, dass** die Folie 21 eine Stärke von 50-100 Mikrometer aufweist.

4. Folie nach einem der vorangehenden Patentansprüche **dadurch gekennzeichnet, dass** die Prägung der Folie 21 eine Tiefe der Prägung 0,01 bis 0,5 mm misst.

5. Folie nach einem der vorangehenden Patentansprüche **dadurch gekennzeichnet, dass** sie zusätzlich eine Trennschicht 22 aufweist.

## Claims

1. Film for the repair of aircraft components made of fiber-reinforced thermoplastic material, comprising a film made of polyimide 21 and a coating made of an electrically conductive material 25, **characterized in that** the film is embossed and the embossed film 21 consists essentially of Kapton, where the electrically conductive material 25 is metal or graphite powder.

2. Film according to claim 1, **characterized in that** the electrically conductive material 25 has a specific resistance and a layer thickness that allow the film 21 to be heated by electrical current.

3. Film according to one of the preceding claims, **characterized in that** the film 21 has a thickness of 50-100 micrometers.

4. Film according to one of the preceding claims, **characterized in that** the embossing of the film 21 measures a depth of the embossing of 0.01 to 0.5 mm.

5. Film according to one of the preceding claims, **characterized in that** it additionally has a separating layer 22.

## Revendications

1. Film pour la réparation de composants d'aéronefs en matière thermoplastique renforcée par des fibres, comprenant un film en polyimide 21 et un revêtement en un matériau électriquement conducteur 25, **caractérisé en ce que** le film est gaufré et le film gaufré 21 est constitué essentiellement de Kapton, où le matériau électriquement conducteur 25 est du métal ou de la poudre de graphite.

2. Film selon la revendication 1, **caractérisé en ce que** le matériau électriquement conducteur 25 présente une résistance spécifique et une épaisseur de couche permettant au film 21 d'être chauffé par courant électrique.

3. Film selon l'une des revendications précédentes, **caractérisé en ce que** le film 21 a une épaisseur de 50 à 100 micromètres.

4. Film selon l'une des revendications précédentes, **caractérisé en ce que** le gaufrage du film 21 mesure une profondeur de gaufrage de 0,01 à 0,5 mm.

5. Film selon l'une des revendications précédentes, **caractérisé en ce qu'**il présente en outre une couche de séparation 22.
